(19) Europäisches Patentamt / European Patent Office / Office européen des brevets

(11) **EP 4 020 373 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **20216618.7**

(22) Anmeldetag: **22.12.2020**

(51) Internationale Patentklassifikation (IPC):
**G06T 5/00** (2006.01)     **G06T 5/50** (2006.01)

(52) Gemeinsame Patentklassifikation (CPC):
**G06T 5/005; G06T 5/50;** G06T 2207/10016; G06T 2207/10028; G06T 2207/10032; G06T 2207/20076; G06T 2207/30241; G06T 2207/30244

(54) **VERFAHREN ZUM ERMITTELN EINES 3D-MODELLS EINER UMGEBUNG**

METHOD FOR DETERMINING A 3D MODEL OF AN ENVIRONMENT

PROCÉDÉ DE DÉTERMINATION D'UN MODÈLE 3D D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.06.2022 Patentblatt 2022/26**

(73) Patentinhaber: **RIEGL Laser Measurement Systems GmbH**
**3580 Horn (AT)**

(72) Erfinder:
- **ULLRICH, Andreas**
  **3003 Gablitz (AT)**
- **STUDNICKA, Nikolaus**
  **1190 Wien (AT)**
- **SCHILD, Raoul**
  **1040 Wien (AT)**

(74) Vertreter: **Weiser & Voith**
**Patentanwälte Partnerschaft**
**Kopfgasse 7**
**1130 Wien (AT)**

(56) Entgegenhaltungen:
- **GRUEN ARMIN ET AL: "JOINT PROCESSING OF UAV IMAGERY AND TERRESTRIAL MOBILE MAPPING SYSTEM DATA FOR VERY HIGH RESOLUTION CITY MODELING", ISPRS - INTERNATIONAL ARCHIVES OF THE PHOTOGRAMMETRY, REMOTE SENSING AND SPATIAL INFORMATION SCIENCES, [Online] Bd. XL-1/W2, 4. September 2013 (2013-09-04), Seiten 175-182, XP055806859, DOI: 10.5194/isprsarchives-XL-1-W2-175-2013 Gefunden im Internet: URL:https://core.ac.uk/download/pdf/193636 235.pdf> [gefunden am 2021-05-25]**
- **ZHANG SHUAI ET AL: "An integrated UAV navigation system based on geo-registered 3D point cloud", 2017 IEEE INTERNATIONAL CONFERENCE ON MULTISENSOR FUSION AND INTEGRATION FOR INTELLIGENT SYSTEMS (MFI), IEEE, 16. November 2017 (2017-11-16), Seiten 650-655, XP033264800, DOI: 10.1109/MFI.2017.8170396 [gefunden am 2017-12-07]**

**Beschreibung**

Die vorliegende Erfindung betrifft ein Verfahren zum Ermitteln eines 3D-Modells einer Umgebung mithilfe eines 3D-Aufnahmegeräts.

Je nach der zu modellierenden Umgebung - z.B. einem Innenraum, einer Gebäudefront, einem Straßenzug, einer Landschaft, einem Steinbruch, einem Bergwerk etc. oder einem Teil davon - und den Anforderungen an die Genauigkeit des dreidimensionalen Modells (3D-Modells) stehen 3D-Aufnahmegeräte unterschiedlicher Technologie zur Verfügung, welche jeweils aus Entfernungsmesswerten 3D-Punktwolken der Umgebung erzeugen: Beispielsweise sind dazu auf dem Prinzip der Licht-Laufzeitmessung basierende Verfahren bekannt, insbesondere Laserabtastverfahren - auch als "LIDAR-" (Light Detection and Ranging-)Verfahren bezeichnet - mit einem die Umgebung mit Laserpulsen sukzessive abtastenden und Reflexionen an der Umgebung laufzeitmessenden Laser-Scanner sowie Laufzeitkameraverfahren, bei welchen ein Lichtpuls die Umgebung beleuchtet und die Reflexion des Lichtpulses an der Umgebung mithilfe einer die Umgebung zweidimensional abbildenden Kamera mit einem pixelweise laufzeitmessenden Bildsensor erfasst werden. Alternativ kann z.B. mit einem auf dem Prinzip der Triangulation basierenden Lichtschnittverfahren eine 3D-Punktwolke erzeugt werden, wobei mit einem Projektor auf die Umgebung ein Lichtmuster projiziert und von einer Fotokamera aufgenommen wird, welche an einer von dem Projektor verschiedenen Position angeordnet ist, sodass aus stereoskopischen Verschiebungen im projizierten Lichtmuster die 3D-Punktwolke erzeugt wird.

Unabhängig von der verwendeten Technologie des 3D-Aufnahmegeräts sind bei stationären 3D-Aufnahmegeräten Lücken im 3D-Modell oft nicht vermeidbar. Solche Lücken resultieren z.B. aus Abschattungen durch Hinterschneidungen in der Umgebung bzw. durch in der Umgebung befindliche Objekte und/oder aus im Wesentlichen in Aufnahmerichtung des 3D-Aufnahmegeräts ausgerichteten Flächen der Umgebung, welche jeweils zu voneinander weit beabstandeten Punkten - und somit zu Bereichen geringer Auflösung - in der erzeugten 3D-Punktwolke führen.

Wenn aufgrund von Anforderungen an die Vollständigkeit des 3D-Modells derartige Lücken nicht akzeptabel sind, können eine oder mehrere weitere 3D-Punktwolken aus jeweils anderer Lage, d.h. anderer Position und Ausrichtung, des 3D-Aufnahmegeräts erzeugt werden, u.zw. entweder durch Umpositionieren des 3D-Aufnahmegeräts oder durch Verwendung mehrerer 3D-Aufnahmegeräte in unterschiedlichen Lagen. Zum Ermitteln des 3D-Modells werden die von den verschiedenen 3D-Aufnahmegeräten bzw. von dem 3D-Aufnahmegerät aus verschiedenen Lagen erzeugten 3D-Punktwolken kombiniert. Dies ist einerseits durch Zur-Deckung-Bringen von mehreren in den verschiedenen 3D-Punktwolken erkannten signifikanten Punkten, z.B. Ecken der Umgebung, möglich, wozu die 3D-Punktwolken einander jeweils überlappen müssen, wie in der Schrift Gruen et al., "Joint Processing of UAV Imagery and Terrestrial Mobile Mapping System Data for Very High Resolution City Modeling", International Archives of the Photogrammetry, Remote Sensing and Spatial Information Sciences, Band XL-1/W2, S. 175 - 182, 4. Sept. 2013, DOI: 10.5194/ isprsarchives-XL-1-W2-175-2013, https://core.ac.uk/download/ pdf/193636235.pdf für zwei verschiedene mobile Aufnahmegeräte beschrieben wird; andererseits können die verschiedenen Lagen, d.h. Positionen und Ausrichtungen, aus welchen das 3D-Aufnahmegerät bzw. die 3D-Aufnahmegeräte jeweils die 3D-Punktwolken erzeugen, genau vermessen und miteinander abgeglichen werden, sodass die jeweiligen 3D-Punktwolken auf ein gemeinsames Koordinatensystem referenziert werden, z.B. darin bereits erzeugt oder hinterher in das Koordinatensystem umgerechnet werden. Beide Fälle sind mit hohem Vermessungs- und/oder Rechenaufwand verbunden. Gerade wenn mehrere oder nur kleine Lücken im 3D-Modell geschlossen bzw. vermieden werden sollen, ist der nötige Aufwand hinderlich.

Die Erfindung setzt sich zum Ziel, ein Verfahren zum Ermitteln eines 3D-Modells einer Umgebung zu schaffen, welches bei geringem Aufwand Lücken im 3D-Modell zuverlässig vermeiden hilft und einfach in der Anwendung ist.

Dieses Ziel wird erfindungsgemäß durch ein Verfahren zum Ermitteln eines 3D-Modells einer Umgebung mithilfe eines stationären ersten 3D-Aufnahmegeräts zum Erzeugen einer ersten 3D-Punktwolke in einem ersten Koordinatensystem, eines mobilen zweiten 3D-Aufnahmegeräts zum Erzeugen zumindest einer zweiten 3D-Punktwolke in einem zweiten Koordinatensystem und einer an die beiden 3D-Aufnahmegeräte anschließbaren oder angeschlossenen Auswerteeinheit erreicht, welches Verfahren die folgenden Schritte umfasst:

3D-Aufnehmen eines ersten Ausschnitts der Umgebung mit dem ersten 3D-Aufnahmegerät von einer im ersten Koordinatensystem ermittelten Ruhelage des ersten 3D-Aufnahmegeräts aus, um die erste 3D-Punktwolke zu erzeugen;

vor oder nach dem 3D-Aufnehmen des ersten Ausschnitts, 3D-Aufnehmen eines zweiten Ausschnitts der Umgebung mit dem zweiten 3D-Aufnahmegerät von einer im zweiten Koordinatensystem ermittelten Aufnahmelage des zweiten 3D-Aufnahmegeräts aus, um die zweite 3D-Punktwolke zu erzeugen;

nach dem 3D-Aufnehmen des zweiten Ausschnitts, Verbringen des zweiten 3D-Aufnahmegeräts von seiner Aufnahmelage in eine im zweiten Koordinatensystem ermittelte Parklage, oder vor dem 3D-Aufnehmen des zweiten Ausschnitts, Verbringen des zweiten 3D-Aufnahmegeräts von einer im zweiten Koordinatensystem ermittelten Parklage in seine Aufnahmelage, wobei in der Parklage das zweite 3D-Aufnahmegerät eine im ersten oder zweiten Koordinatensystem ermittelte Relativlage gegenüber der Ruhelage des ersten 3D-Aufnahmegeräts einnimmt;

Abgleichen des zweiten Koordinatensystems mit dem ersten Koordinatensystem unter Berücksichtigung der Relativlage und einer im selben Koordinatensystem wie die Relativlage ermittelten Abweichung zwischen der im zweiten Koordinatensystem ermittelten Parklage und der im ersten Koordinatensystem ermittelten Ruhelage;

nach dem Abgleichen, Aufstellen der zweiten 3D-Punktwolke im ersten Koordinatensystem; und

Vereinigen der ersten und zweiten 3D-Punktwolken im ersten Koordinatensystem zu dem 3D-Modell in der Auswerteeinheit.

Die Aufnahmelage des zweiten 3D-Aufnahmegeräts ist somit von der Ruhelage des ersten 3D-Aufnahmegeräts unabhängig. Jedoch nimmt das zweite 3D-Aufnahmegerät in seiner Parklage zu der Ruhelage des ersten 3D-Aufnahmegeräts eine eindeutige Relativlage ein; das erste und zweite 3D-Aufnahmegerät und mit ihnen das erste und zweite Koordinatensystem sind somit in der Ruhelage bzw. in der Parklage über die Relativlage ganz einfach mechanisch aneinander ausgerichtet. Eine aufwändige Vermessung der absoluten oder der gegenseitigen Lage des ersten und zweiten 3D-Aufnahmegeräts oder ein rechnerisches Abgleichen der ersten und zweiten 3D-Punktwolken entfallen dadurch und Lücken im 3D-Modell werden vermieden; auch Bereiche der Umgebung, welche außerhalb des ersten Ausschnitts liegen, und/oder Veränderungen in der Umgebung, welche zwischen dem ersten 3D-Aufnehmen und dem zweiten 3D-Aufnehmen stattgefunden haben, fließen so in das Ermitteln des 3D-Modells ein. Die Relativlage wird vor oder nach dem 3D-Aufnehmen ermittelt und kann dabei insbesondere fix sein. Beispielsweise kann das zweite 3D-Aufnahmegerät seine Parklage in einer dafür vorgesehenen Ablage oder Halterung an dem in der Ruhelage befindlichen ersten 3D-Aufnahmegerät und so eine fixe Relativlage einnehmen.

Das mobile zweite 3D-Aufnahmegerät kann z.B. über eine geringere Auflösung und/oder eine geringere Genauigkeit als das stationäre erste 3D-Aufnahmegerät verfügen und verbessert dennoch mit seiner erzeugten zweiten 3D-Punktwolke das 3D-Modell der Umgebung. Anstelle eines einzigen können mehrere zweite Ausschnitte von mehreren Aufnahmelagen des zweiten 3D-Aufnahmegeräts aus 3D-aufgenommen werden. Beispielsweise ist das zweite 3D-Aufnahmegerät ein Hand-Scanner, ein mit entsprechenden Sensoren bzw. Kameras ausgestattetes Mobiltelefon od.dgl.

Um eine Verknüpfung zwischen der Aufnahmelage und der Parklage des zweiten 3D-Aufnahmegeräts und somit - über die Relativlage - zwischen der ersten und der zweiten 3D-Punktwolke herzustellen, sind verschiedene Varianten möglich. Allen Varianten gemeinsam ist, dass lediglich die Lageänderung des zweiten 3D-Aufnahmegeräts zwischen seiner Aufnahmelage und seiner Parklage und nicht seine (relative) Lage gegenüber dem ersten 3D-Aufnahmegerät oder seine absolute Lage in der Umgebung ermittelt wird.

In dem Fall, dass das zweite 3D-Aufnahmegerät nach dem 3D-Aufnehmen des zweiten Ausschnitts von seiner Aufnahmelage in seine Parklage verbracht wird, ist besonders günstig, wenn das zweite 3D-Aufnahmegerät eine Trajektorie von während des Verbringens im zweiten Koordinatensystem erfassten Lageänderungen erzeugt, und wenn die Parklage im zweiten Koordinatensystem aus der Aufnahmelage und dieser Trajektorie ermittelt wird. In dem alternativen Fall, dass das zweite 3D-Aufnahmegerät vor dem 3D-Aufnehmen des zweiten Ausschnitts von seiner Parklage in seine Aufnahmelage verbracht wird, ist besonders günstig, wenn das zweite 3D-Aufnahmegerät eine Trajektorie von während des Verbringens im zweiten Koordinatensystem erfassten Lageänderungen erzeugt, und wenn die Aufnahmelage im zweiten Koordinatensystem aus der Parklage und dieser Trajektorie ermittelt wird. Dadurch wird die Parklage aus der Aufnahmelage oder die Aufnahmelage aus der Parklage nach einem odometrischen (auch: "hodometrischen") Verfahren mithilfe dieser Trajektorie ermittelt. Verfahren zur Erzeugung einer solchen Trajektorie stehen auf Grundlage unterschiedlicher Sensoren und mit verschiedenem Aufwand und unterschiedlicher Genauigkeit zur Verfügung. Je nach Erfordernis kann somit ein geeignetes Verfahren genutzt werden.

Besonders einfach ist, wenn die Lageänderungen mithilfe einer Trägheitsmesseinheit des zweiten 3D-Aufnahmegeräts erfasst werden. Trägheitsmesseinheiten (auch als "inertiale Messeinheiten" oder "Inertial Measurement Units", IMU, bekannt) sind in geringer Baugröße verfügbar und liefern Messwerte für die Lageänderungen, welche die Trajektorie mit hoher lokaler Genauigkeit ermitteln lassen. Eine systembedingte Drift, d.h. ein systematischer Messfehler, führt jedoch bei großer Trajektorienlänge zu Ungenauigkeiten, welche z.B. durch Wiederholungsmessungen reduziert werden können.

Alternativ oder ergänzend dazu ist vorteilhaft, wenn die Lageänderungen mithilfe eines globalen Navigationssatellitensystem-Empfängers des zweiten 3D-Aufnahmegeräts erfasst werden. Globale Navigationssatellitensysteme ("GNSS") arbeiten driftfrei, liefern jedoch eine beschränkte lokale Genauigkeit, insbesondere in Innenräumen; ferner ist für die Lage des zweiten 3D-Aufnahmegeräts zwar seine Position, jedoch nicht unmittelbar seine Ausrichtung mithilfe eines GNSS-Empfängers erfassbar.

In einer weiteren alternativen oder ergänzenden Ausführungsform werden vorteilhafterweise die Lageänderungen mithilfe einer Bildauswertung von während des Verbringens aufeinanderfolgend aufgenommenen Bildern einer Fotokamera des zweiten 3D-Aufnahmegeräts erfasst. Bildauswertungen solcher Art sind weit entwickelt und insbesondere zur Ausrichtungsbestimmung sehr gut verwendbar. Ferner sind Fotokameras guter Qualität und geringer Baugröße z.B. infolge aktueller Entwicklungen für Mobiltelefone verfügbar. Bei Verwendung eines Mobiltelefons als zweites 3D-Aufnahmegerät wären in dieser Ausführungsform keine zusätzlichen Sensoren zum Erfassen der Lageänderung erforderlich.

Gemäß einer weiteren alternativen oder ergänzenden Ausführungsform ist besonders günstig, wenn die Lageänderungen mithilfe einer Auswertung von während des Verbringens aufeinanderfolgend aufgenommenen weiteren 3D-Punktwolken des zweiten 3D-Aufnahmegeräts erfasst werden. In dieser Ausführungsform ist die Lage des zweiten 3D-Aufnahmegeräts besonders präzise erfassbar. Dabei wird die ohnehin vorhandene Funktion des 3D-Aufnahmegeräts mehrfach genutzt, sodass keinerlei zusätzliche Sensoren erforderlich sind.

Um die Vorteile unterschiedlicher Verfahren zur Erfassung der Lageänderungen besonders einfach nutzen zu können, ist vorteilhaft, wenn zum Erzeugen der Trajektorie auf die erfassten Lageänderungen ein Minimum-Varianz-Schätzer, bevorzugt ein Kalman-Filter, angewandt wird. Mehrere Eingangsdaten aus unterschiedlichen Erfassungen der Lageänderungen können dadurch genutzt und in einer Weise kombiniert werden, dass die Genauigkeit der erzeugten Trajektorie weiter erhöht wird. Beispielsweise wirkt die Kombination von Erfassungsdaten einer Trägheitsmesseinheit und eines GNSS-Empfängers einerseits durch die Driftfreiheit des GNSS der Drift der Trägheitsmesseinheit und andererseits durch die hohe lokale Genauigkeit der Trägheitsmesseinheit den diesbezüglichen Einschränkungen des GNSS entgegen. Ähnliches gilt für die Kombinationen anderer der genannten Ausführungsformen zum Erfassen der Lageänderungen des zweiten 3D-Aufnahmegeräts. Auf Grundlage einer mit hoher Genauigkeit erzeugten Trajektorie können die Parklage im zweiten Koordinatensystem aus der Aufnahmelage bzw. die Aufnahmelage im zweiten Koordinatensystem aus der Parklage und somit das 3D-Modell besonders präzise ermittelt werden.

In einer vorteilhaften Ausführungsvariante erzeugt das erste und/oder das zweite 3D-Aufnahmegerät die jeweilige 3D-Punktwolke nach einem Laserabtastverfahren. Ein solches Laserabtastverfahren führt im Allgemeinen zu einer besonders präzisen und hochauflösenden 3D-Punktwolke und ermöglicht damit ein hochgenaues 3D-Modell der Umgebung. In einer alternativen oder ergänzenden Ausführungsform erzeugt das erste und/oder das zweite 3D-Aufnahmegerät die jeweilige 3D-Punktwolke nach einem Laufzeitkameraverfahren. Ein Laufzeitkameraverfahren eignet sich für das erste und insbesondere für das zweite 3D-Aufnahmegerät, da die dafür eingesetzten Messeinrichtungen vergleichsweise klein bauen und das zweite 3D-Aufnahmegerät dadurch besonders mobil ist. In einer noch einfacheren Ausführungsform erzeugt das erste und/oder das zweite 3D-Aufnahmegerät die jeweilige 3D-Punktwolke nach einem Lichtschnittverfahren mit Lichtmusterprojektion. Ein derartiges, nach dem Triangulationsprinzip arbeitendes Lichtschnittverfahren ermöglicht einen besonders einfachen Aufbau des jeweiligen 3D-Aufnahmegeräts mit einem Projektor und einer herkömmlichen digitalen Fotokamera.

Das Verbringen des zweiten 3D-Aufnahmegeräts von seiner Aufnahmelage in seine Parklage oder umgekehrt kann beispielsweise manuell oder mittels z.B. eines automatischen Fahrzeugs bzw. Roboters erfolgen. Besonders günstig ist, wenn das Verbringen mittels eines unbemannten Luftfahrzeugs erfolgt. Das gesamte Verfahren kann auf diese Weise unabhängig von der Beschaffenheit der Umgebung vollständig maschinengesteuert ablaufen; insbesondere kann das Verfahren dadurch zentral vorgeplant und/oder in Abhängigkeit von einen Schwellwert überschreitenden Abständen benachbarter Punkte der ersten 3D-Punktwolke ausgeführt werden.

Die Erfindung wird nachfolgend anhand von in den beigeschlossenen Zeichnungen dargestellten Ausführungsbeispielen näher erläutert. In den Zeichnungen zeigen:

Fig. 1 eine Umgebung, deren 3D-Modell nach einem erfindungsgemäßen Verfahren mithilfe eines stationären und eines mobilen 3D-Aufnahmegeräts ermittelt wird, in einer Perspektivansicht von schräg oben;

Fig. 2 mehrere Varianten des Verfahrens von Fig. 1 in einem Flussdiagramm;

die Fig. 3a und 3b jeweils eine Trajektorie von während des Verfahrens von Fig. 1 erfassten Lageänderungen des mobilen 3D-Aufnahmegeräts, jeweils in einem Diagramm einer Lage über der Zeit;

die Fig. 4a - 4c und 5a - 5c ein Abgleichen eines zweiten mit einem ersten Koordinatensystem gemäß dem Verfahren von Fig. 1 unter Berücksichtigung einer im ersten (Fig. 4a - 4c) bzw. im zweiten (Fig. 5a - 5c) Koordinatensystem ermittelten Relativlage und Abweichung, jeweils in einem vereinfachten zweidimensionalen Diagramm; und

Fig. 6 die Umgebung von Fig. 1 mit einer Variante des Verfahrens von Fig. 1 in einer Perspektivansicht von schräg oben.

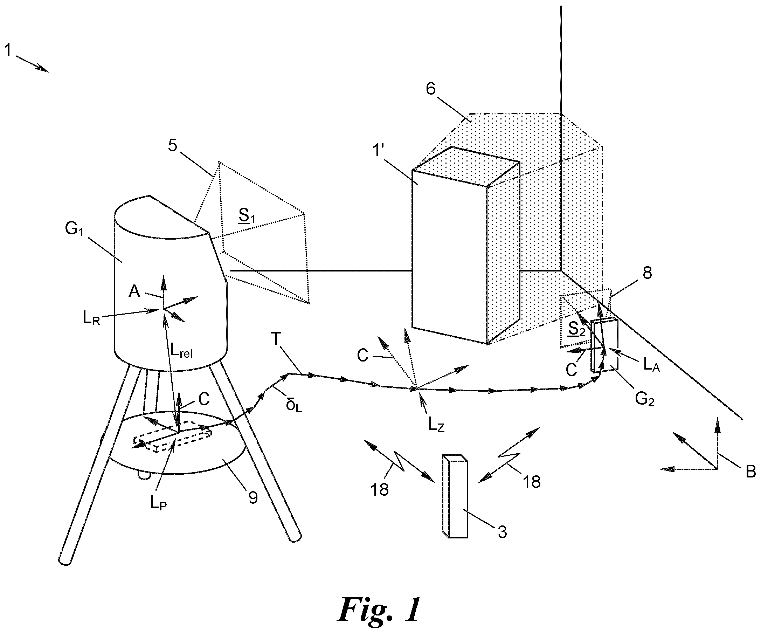

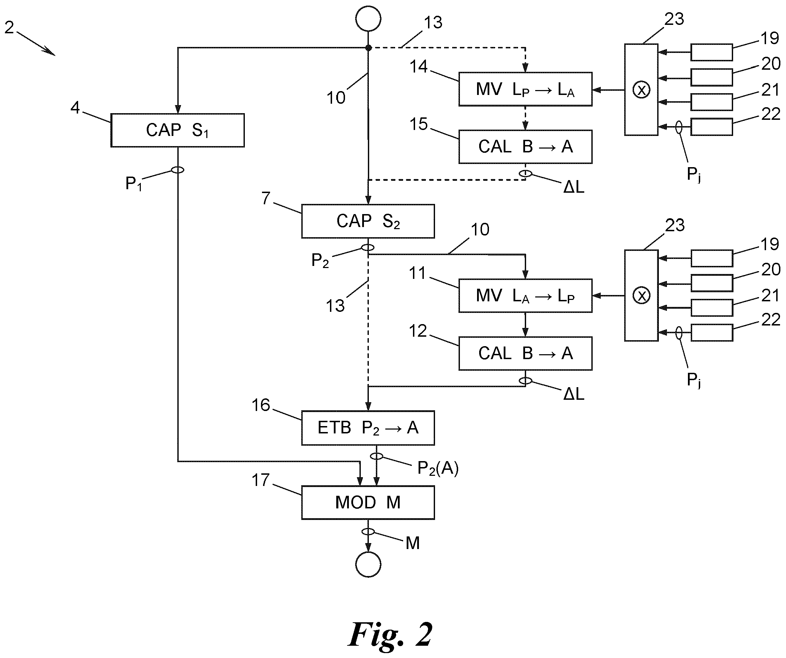

Fig. 1 zeigt eine Umgebung 1 (in diesem Beispiel: einen Teil eines Innenraums), welche ein (in diesem Beispiel: etwa quaderförmiges) Objekt 1' umfasst und deren dreidimensionales Modell (3D-Modell) M mithilfe eines Verfahrens 2 (Fig. 2) ermittelt wird. Das Ermitteln des 3D-Modells M erfolgt mithilfe eines ersten 3D-Aufnahmegeräts $G_1$, welches zum Erzeugen einer ersten 3D-Punktwolke $P_1$ in einem ersten, ihm eigenen Koordinatensystem A ausgebildet ist. Das erste 3D-Aufnahmegerät $G_1$ ist stationär, wie weiter unten näher erläutert wird. Das Ermitteln des 3D-Modells M erfolgt ferner mithilfe eines zweiten 3D-Aufnahmegeräts $G_2$, welches zum Erzeugen einer zweiten 3D-Punktwolke $P_2$ in einem zweiten Koordinatensystem B ausgebildet ist, das dem zweiten 3D-Aufnahmegerät $G_2$ zueigen ist. Das zweite 3D-Aufnahmegerät $G_2$ ist mobil, insbesondere ein tragbares ("handheld") zweites 3D-Aufnahmegerät $G_2$. Eine Auswerteeinheit 3 ist an die beiden 3D-Aufnahmegeräte $G_1$, $G_2$ anschließbar oder angeschlossen und unterstützt das Ermitteln des 3D-Modells M.

Gemäß Fig. 2 wird in einem Schritt 4 mit dem ersten 3D-Aufnahmegerät $G_1$ ein erster Ausschnitt $S_1$ der Umgebung 1 3D-aufgenommen, wie in Fig. 1 durch ein pyramidenförmiges Sichtfeld 5 symbolisiert, um die erste 3D-Punktwolke $P_2$ zu erzeugen. Das erste 3D-Aufnahmegerät $G_1$ befindet sich dabei in einer Ruhelage $L_R$, welche im ersten Koordinatensystem A ermittelt ist.

In diesem Zusammenhang wird festgehalten, dass der Begriff "Lage" im Rahmen der vorliegenden Offenbarung jeweils sowohl eine räumliche Position, z.B. die x-, y- und z-Achswerte eines kartesischen Koordinatensystems, als auch eine räumliche Ausrichtung umfasst, z.B. Nick-, Roll- und Gierwinkel um die jeweilige x-, y- bzw. z-Achse des Koordinatensystems, und somit eine sechsdimensionale Größe bezeichnet.

Da das erste 3D-Aufnahmegerät $G_1$ stationär ist, sind gegenüber diesem das erste Koordinatensystem A und die Ruhelage $L_R$ im Allgemeinen fix vorgegeben und somit vorab ermittelt; alternativ könnte die Ruhelage $L_R$ in einem separaten Verfahrensschritt ermittelt und/oder das erste Koordinatensystem A z.B. durch einen Bezugspunkt in der Umgebung 1 vorgegeben werden.

Beim 3D-Aufnehmen 4 des ersten Ausschnitts $S_1$ der Umgebung 1 wird ein - aus Sicht des ersten 3D-Aufnahmegeräts $G_1$ hinter dem Objekt 1' liegender, in Fig. 1 punktierter - Bereich 6 der Umgebung 1 von dem Objekt 1' abgeschattet, d.h. der Bereich 6 ist für das erste 3D-Aufnahmegerät $G_1$ aus seiner Ruhelage $L_R$ nicht erfassbar. Die erste 3D-Punktwolke $P_1$ enthält in diesem Bereich 6 somit kein Ergebnis für das 3D-Modell M. Um daraus resultierenden Lücken im 3D-Modell M entgegenzuwirken, wird in einem Schritt 7 ein zweiter Ausschnitt $S_2$ der Umgebung 1 mit dem zweiten 3D-Aufnahmegerät $G_2$ 3D-aufgenommen, wie in Fig. 1 durch ein Sichtfeld 8 symbolisiert, um die zweite 3D-Punktwolke $P_2$ zu erzeugen. Dies erfolgt von einer Aufnahmelage $L_A$ des zweiten 3D-Aufnahmegeräts $G_2$ aus, welche im zweiten Koordinatensystem B ermittelt ist.

Im Allgemeinen ist der zweite Ausschnitt $S_2$ vom ersten Ausschnitt $S_1$ verschieden, u.zw. bereits deshalb, weil die Ruhelage $L_R$ vom ersten 3D-Aufnahmegerät $G_1$ eingenommen und somit von der Aufnahmelage $L_A$ verschieden ist. Der erste Ausschnitt $S_1$ und der zweite Ausschnitt $S_2$ können einander überlappen, weitgehend oder sogar gänzlich zusammenfallen oder voneinander völlig verschieden sein, z.B. wenn der zweite Ausschnitt $S_2$ auf der Rückseite des Objekts 1' liegt. Ferner kann das zweite Aufnahmegerät $G_2$ in Schritt 7 verschiedene zweite Ausschnitte $S_2$ aus verschiedenen Aufnahmelagen $L_A$ 3D-aufnehmen, um mehrere zweite 3D-Punktwolken $P_2$ zu erzeugen.

Das 3D-Aufnehmen 4 des ersten Ausschnitts $S_1$ erfolgt zeitlich unabhängig vom 3D-Aufnehmen 7 des zweiten Ausschnitts $S_2$, d.h. vorher, zugleich oder nachher. Es versteht sich, dass das 3D-Aufnehmen 7 des zweiten Ausschnitts $S_2$ mit dem mobilen zweiten 3D-Aufnahmegerät $G_2$ im Allgemeinen in einem gerätefesten dritten Koordinatensystem C des zweiten 3D-Aufnahmegeräts $G_2$ erfolgt, dass jedoch das zweite 3D-Aufnahmegerät $G_2$ beim Erzeugen der zweiten 3D-Punktwolke $P_2$ diese - gleichzeitig oder anschließend - in das eigene stationäre zweite Koordinatensystem B umrechnet oder in diesem erstellt.

Um das 3D-Modell M zu ermitteln, wird nun das zweite Koordinatensystem B mit dem ersten Koordinatensystem A abgeglichen. Dazu ist eine im zweiten Koordinatensystem B ermittelte Parklage $L_P$ vorgesehen, in welcher das zweite 3D-Aufnahmegerät $G_2$ eine im ersten oder zweiten Koordinatensystem A bzw. B ermittelte Relativlage $L_{rel}$ gegenüber der Ruhelage $L_R$ des ersten 3D-Aufnahmegeräts $G_1$ einnimmt. Das erste 3D-Aufnahmegerät $G_1$ hat dafür optional eine Auflage 9 oder Halterung für das zweite 3D-Aufnahmegerät $G_2$; dabei nimmt das erste 3D-Aufnahmegerät $G_1$ sowohl beim 3D-Aufnehmen 4 des ersten Ausschnitts $S_1$ der Umgebung 1 als auch beim Einnehmen der Parklage $L_P$ durch das zweite Aufnahmegerät $G_2$ seine Ruhelage $L_R$ ein und ist dadurch im Sinne der vorliegenden Offenbarung "stationär". Alternativ ist die Parklage $L_P$ vom ersten 3D-Aufnahmegerät $G_1$ getrennt, wobei das erste 3D-Aufnahmegerät $G_1$ zumindest bis zum Ermitteln der Relativlage $L_{rel}$ gegenüber seiner Ruhelage $L_R$ im Sinne der vorliegenden Offenbarung "stationär" ist. Darüber hinaus kann das erste 3D-Aufnahmegerät $G_1$ optional selbst transportabel sein.

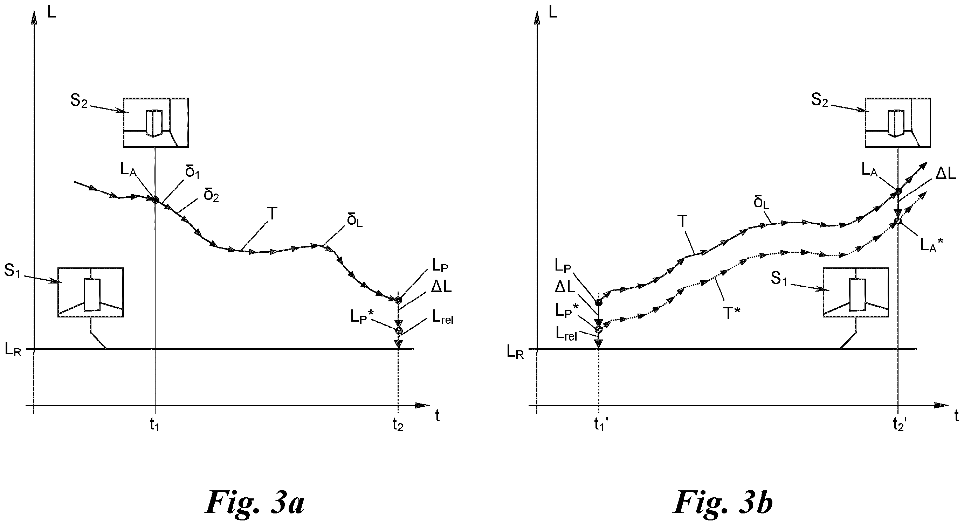

In einer ersten, in Fig. 3a gezeigten Variante des Verfahrens 2, welche in Fig. 2 durch einen durchgezogenen Zweig 10 versinnbildlicht ist, wird in einem Schritt 11 nach dem 3D-Aufnehmen 7 des zweiten Ausschnitts $S_2$ (Zeitpunkt $t_1$) das zweite 3D-Aufnahmegerät $G_2$ von seiner Aufnahmelage $L_A$ in die Parklage $L_p$ verbracht, welche das zweite 3D-Aufnahmegerät $G_2$ zu einem zweiten Zeitpunkt $t_2$ einnimmt. Das erste 3D-Aufnahmegerät $G_1$ nimmt zumindest zwischen den beiden Zeitpunkten $t_1$ und $t_2$ unverändert seine Ruhelage $L_R$ ein, d.h. es ist stationär. In der Darstellung der Fig. 3a ist das Verbringen 11 durch aufeinanderfolgende Lageänderungen $\delta_1$, $\delta_2$, ..., allgemein $\delta_L$, versinnbildlicht (hier: in grob vereinfachter Form - nämlich eindimensional - über der Zeit), welche das zweite 3D-Aufnahmegerät $G_2$ während des Verbringens 11 im zweiten Koordinatensystem B erfasst und daraus eine Trajektorie T von Lageänderungen $\delta_L$ erzeugt. Tatsächlich werden die Lageänderungen $\delta_L$ sechsdimensional erfasst und ist somit die Trajektorie T sechsdimensional, wie die sich in Fig. 1 von der Parklage $L_P$ entlang der Trajektorie T über eine Zwischenlage $L_Z$ bis zur Aufnahmelage $L_A$ ändernde Lage, d.h. Position und Ausrichtung, des dritten Koordinatensystems C zeigt.

Ein solches laufendes Erfassen von Lageänderungen $\delta_L$ zum Bestimmen einer Lage ist beispielsweise als Odometrie (auch: "Hodometrie") bekannt und wird z.B. zur Koppelnavigation genutzt. Ganz allgemein kann alternativ zum Erzeugen der Trajektorie T eine Lagedifferenz zwischen der Parklage $L_P$ und der Aufnahmelage $L_A$ z.B. von außen im zweiten Koordinatensystem B ermittelt werden.

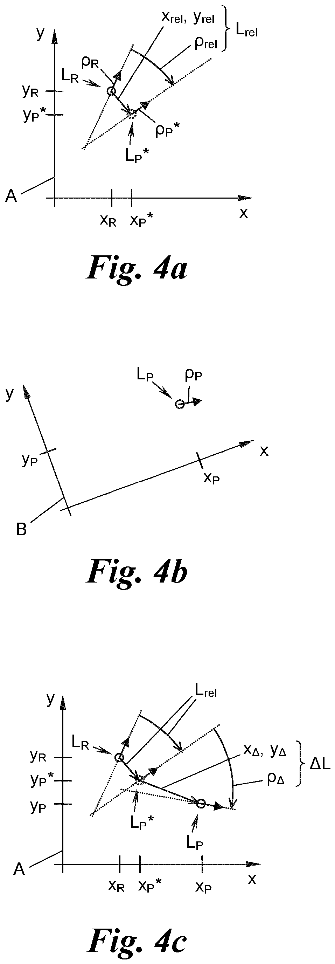

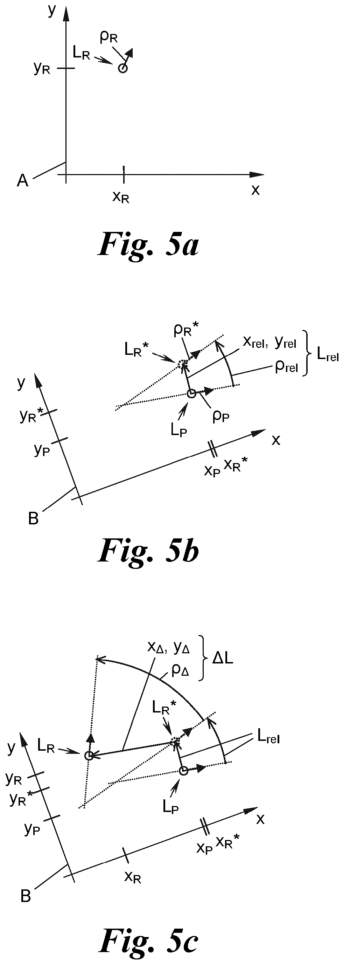

In einem auf Schritt 11 folgenden Schritt 12 wird das zweite Koordinatensystem B mit dem ersten Koordinatensystem A abgeglichen; das Abgleichen 12 erfolgt unter Berücksichtigung der Relativlage $L_{rel}$ und einer verbleibenden Abweichung $\Delta L$ zwischen der im zweiten Koordinatensystem B ermittelten Parklage $L_P$ und der im ersten Koordinatensystem A ermittelten Ruhelage $L_R$, wie weiter unten anhand der Fig. 4a - 4c und 5a - 5c näher erläutert wird. Dabei wird die genannte Abweichung $\Delta L$ im selben Koordinatensystem A, B wie die Relativlage $L_{rel}$ ermittelt.

Das Beispiel der Fig. 3b und ein zum Zweig 10 alternativer, strichlierter Zweig 13 in Fig. 2 zeigen eine alternative Variante des Verfahrens 2. Dabei nimmt das zweite 3D-Aufnahmegerät $G_2$ seine Parklage $L_P$ in einem Zeitpunkt $t_1'$ bereits ein und wird danach, d.h. vor dem 3D-Aufnehmen des zweiten Ausschnitts $S_2$ in einem Zeitpunkt $t_2'$ in einem Schritt 14 entlang der Trajektorie T von seiner Parklage $L_P$ in seine Aufnahmelage $L_A$ verbracht. Das erste 3D-Aufnahmegerät $G_1$ ist zwischen den beiden Zeitpunkten $t_1'$ und $t_2'$ wieder stationär. In einem Schritt 15 wird das zweite Koordinatensystem B mit dem ersten Koordinatensystem A abgeglichen.

Die Fig. 4a - 4c und 5a - 5c illustrieren das Abgleichen (Schritte 12 bzw. 15) jeweils vereinfacht, u.zw. indem das erste und das zweite Koordinatensystem A, B - und damit sowohl die Position als auch die Ausrichtung - hier vereinfacht zweidimensional dargestellt sind.

Dazu wird im Beispiel der Fig. 4a - 4c die Abweichung $\Delta L$ im ersten Koordinatensystem A ermittelt, in welchem auch die Relativlage $L_{rel}$ zuvor ermittelt wurde. Die ebenfalls im ersten Koordinatensystem A ermittelte Ruhelage $L_R$ hat gemäß Fig. 4a die Positionskoordinaten $x_R$, $y_R$ und den Ausrichtungsvektor $\rho_R$. Die im zweiten Koordinatensystem B ermittelte Parklage $L_P$ hat gemäß Fig. 4b die Positionskoordinaten $x_P$, $y_P$ und den Ausrichtungsvektor $\rho_P$. Dieselbe Parklage $L_P$ erscheint im ersten Koordinatensystem A an anderer Position und in anderer Ausrichtung, u.zw. gemäß Fig. 4a als Parklage $L_P^*$ an der Position $x_P^*$, $y_P^*$ und in der Ausrichtung $\rho_P^*$. Die Position $x_P^*$, $y_P^*$ und die Ausrichtung $\rho_P^*$ der Parklage $L_P^*$ sind im ersten Koordinatensystem A aus der Ruhelage $L_R$ und der Relativlage $L_{rel}$, um welche sich die Parklage $L_P^*$ im ersten Koordinatensystem A von der Ruhelage $L_R$ unterscheidet, rekonstruierbar, wie in Fig. 4a dargestellt. In dem optionalen Fall, dass sowohl die Relativposition $x_{rel}$, $y_{rel}$ als auch die Relativausrichtung $\rho_{rel}$ der Relativlage $L_{rel}$ gleich Null sind, fällt die Parklage $L_P^*$ im ersten Koordinatensystem A mit der Ruhelage $L_R$ überhaupt zusammen.

Um die Abweichung $\Delta L$ in Position $x_\Delta$, $y_\Delta$ und Ausrichtung $\rho_\Delta$ zwischen dem ersten und dem zweiten Koordinatensystem A, B zu ermitteln, genügt es, die Position $x_P$, $y_P$ und die Ausrichtung $\rho$, d.h. die Parklage $L_P$, aus dem zweiten Koordinatensystems B unverändert im ersten Koordinatensystem A zu betrachten; die Abweichung $\Delta L$ ergibt sich daraus unmittelbar gegenüber der Parklage $L_P^*$ im ersten Koordinatensystem A, siehe Fig. 4c.

Die Beispiele der Fig. 5a - 5c illustrieren den umgekehrten Fall, in welchem die Abweichung $\Delta L$ im zweiten Koordinatensystem B ermittelt wird, wenn dort auch die Relativlage $L_{rel}$ ermittelt wurde. Hinsichtlich der Ruhelage $L_R$ entspricht die Darstellung in Fig. 5a jener in Fig. 4a; hinsichtlich der Parklage $L_P$ entspricht die Darstellung in Fig. 5b jener in Fig. 4b. Die (hier gegenüber Fig. 4a spiegelbildliche) Relativlage $L_{rel}$ führt gemäß Fig. 5b im zweiten Koordinatensystem B von der Parklage $L_P$ zu einer mit der im ersten Koordinatensystem A ermittelten Ruhelage $L_R$ identischen Ruhelage $L_R^*$ im zweiten Koordinatensystem B. Die genannte Abweichung $\Delta L$ in Position $x_\Delta$, $y_\Delta$ und Ausrichtung $\rho_\Delta$ ergibt sich gemäß Fig. 5c zwischen der aus dem ersten Koordinatensystem A unverändert in das zweite Koordinatensystem B übernommenen Ruhelage $L_R$ und der Ruhelage $L_R^*$ im zweiten Koordinatensystem B.

Mit der ermittelten Abweichung $\Delta L$ (Fig. 4c oder Fig. 5c) lässt sich das zweite Koordinatensystem B mit dem ersten Koordinatensystem A abgleichen (Schritte 12, 15).

Fig. 3a zeigt das Ermitteln der Abweichung $\Delta L$ gemäß der durch den durchgezogenen Zweig 10 in Fig. 2 dargestellten Verfahrensvariante in vereinfachter eindimensionaler Darstellung über der Zeit. Die Abweichung $\Delta L$ ergibt sich wie gezeigt zwischen der im zweiten Koordinatensystem B ermittelten Parklage $L_P$ und der unter Berücksichtigung der Relativlage $L_{rel}$ aus der stationären Ruhelage $L_R$ rekonstruierten Parklage $L_P^*$ im ersten Koordinatensystem A.

Fig. 3b zeigt das Ermitteln der Abweichung $\Delta L$ gemäß der durch den strichlierten Zweig 13 in Fig. 2 dargestellten Verfahrensvariante in vereinfachter eindimensionaler Darstellung über der Zeit wie zuvor für Fig. 3a beschrieben. Dabei wird wie gezeigt zuerst das Verbringen 14 und danach das Abgleichen 15 ausgeführt, was in Fig. 3b durch eine im ersten Koordinatensystem A rekonstruierte Aufnahmelage $L_A^*$ versinnbildlicht ist, welche von der Parklage $L_P$ über die Trajektorie T (mit durchgezogenen Linien) zur Aufnahmelage $L_A$ und über die ermittelte Abweichung $\Delta L$ erreicht wird. Alternativ könnte aber auch zuerst das Abgleichen 15 und danach das Verbringen 14 ausgeführt, wobei das zweite Koordinatensystem B nach dem Abgleichen 15 dann mit dem ersten Koordinatensystem A zusammenfällt. Dieser Fall ist in Fig. 3b durch eine im ersten Koordinatensystem A rekonstruierte Trajektorie T* (mit punktierten Linien) versinnbildlich, über welche die rekonstruierte Aufnahmelage $L_A^*$ ausgehend von der im ersten Koordinatensystem A rekonstruierten Parklage $L_P^*$ erreicht wird.

Zurückkommend auf Fig. 2 wird nach dem Abgleichen 12 bzw. 15 in einem Schritt 16 die zweite 3D-Punktwolke $P_2$ im ersten Koordinatensystem A aufgestellt, u.zw. falls nicht infolge des Abgleichens 15 das zweite Koordinatensystem B mit dem ersten Koordinatensystem A zusammenfällt z.B. mithilfe einer affinen Transformation. Ist beispielsweise die Abweichung $\Delta L$ zwischen den Koordinatensystemen A und B im zweiten Koordinatensystem B als eine dreidimensionale Positionsabweichung (Linearverschiebung) $x_\Delta$, $y_\Delta$, $z_\Delta$ und eine (hier: in Eulerwinkeln gegebene) dreidimensionale Ausrichtungsabweichung (Verdrehung) $\rho_{x\Delta}$, $\rho_{y\Delta}$, $\rho_{z\Delta}$ ermittelt worden, folgt durch Transformation für jeden Punkt der zweiten

3D-Punktwolke $P_2$ aus seiner Position $x_B$, $y_B$, $z_B$ im zweiten Koordinatensystem B eine Position $x_A$, $y_A$, $z_A$ im ersten Koordinatensystem A gemäß:

$$\begin{pmatrix} x_A \\ y_A \\ z_A \end{pmatrix} = \begin{pmatrix} \cos\rho_{x\Delta}\cos\rho_{z\Delta} - \sin\rho_{x\Delta}\cos\rho_{y\Delta}\sin\rho_{z\Delta} & \cos\rho_{x\Delta}\sin\rho_{z\Delta} + \sin\rho_{x\Delta}\cos\rho_{y\Delta}\cos\rho_{z\Delta} & \sin\rho_{x\Delta}\sin\rho_{y\Delta} \\ -\sin\rho_{x\Delta}\cos\rho_{z\Delta} - \cos\rho_{x\Delta}\cos\rho_{y\Delta}\sin\rho_{z\Delta} & -\sin\rho_{x\Delta}\sin\rho_{z\Delta} + \cos\rho_{x\Delta}\cos\rho_{y\Delta}\cos\rho_{z\Delta} & \cos\rho_{x\Delta}\sin\rho_{y\Delta} \\ \sin\rho_{y\Delta}\sin\rho_{z\Delta} & -\sin\rho_{y\Delta}\cos\rho_{z\Delta} & \cos\rho_{y\Delta} \end{pmatrix} \cdot \begin{pmatrix} x_B - x_\Delta \\ y_B - y_\Delta \\ z_B - z_\Delta \end{pmatrix}$$

In einem folgenden Schritt 17 werden in der Auswerteeinheit 3 die ersten und zweiten 3D-Punktwolken $P_1$, $P_2$ im ersten Koordinatensystem A zu dem 3D-Modell M vereinigt. Die Auswerteeinheit 3 ist dazu an das erste und das zweite 3D-Aufnahmegerät $G_1$, $G_2$ beispielsweise über eine Funkverbindung 18 oder eine Kabelverbindung angeschlossen oder über einen portablen Datenträger, z.B. USB-Stick, an jedes der 3D-Aufnahmegeräte $G_1$, $G_2$ zum Datenaustausch anschließbar. In einer alternativen Ausführungsform ist die Auswerteeinheit 3 in eines der beiden 3D-Aufnahmegeräte $G_1$, $G_2$ - insbesondere in das erste 3D-Aufnahmegerät $G_1$ - aufgenommen bzw. durch dieses gebildet und ist auch an das jeweils andere 3D-Aufnahmegerät $G_2$, $G_1$ angeschlossen bzw. anschließbar. Es versteht sich, dass die Schritte des Abgleichens 12, 15 und/oder des Aufstellens 16 jeweils im zweiten Aufnahmegerät $G_2$, im ersten Aufnahmegerät $G_1$ oder in der Auswerteeinheit 3 ausgeführt werden können.

Die Lageänderungen $\delta_L$ des zweiten 3D-Aufnahmegeräts $G_2$ beim Verbringen 11, 14 werden in einer optionalen ersten Variante mithilfe einer Trägheitsmesseinheit 19 (auch: "inertialen Messeinheit", "Inertial Measurement Unit" oder "IMU") des zweiten 3D-Aufnahmegeräts $G_2$ erfasst. In einer alternativen oder ergänzenden zweiten Variante werden die Lageänderungen $\delta_L$ mithilfe eines globalen Navigationssatellitensystem- ("GNSS"-)Empfängers 20, z.B. eines GPS-, Galileo-, GLONASS- bzw. BEIDOU-Empfängers, des zweiten 3D-Aufnahmegeräts $G_2$ erfasst. In einer alternativen oder ergänzenden dritten Variante werden die Lageänderungen $\delta_L$ mithilfe einer Bildauswertung 21 von während des Verbringens aufeinanderfolgend aufgenommenen Bildern einer Fotokamera des zweiten 3D-Aufnahmegeräts $G_2$ erfasst. In einer alternativen oder ergänzenden vierten Variante werden die Lageänderungen $\delta_L$ - ähnlich zur vorgenannten Bildauswertung - mithilfe einer Auswertung 22 von während des Verbringens 11, 14 aufeinanderfolgend aufgenommenen weiteren 3D-Punktwolken $P_j$ des zweiten 3D-Aufnahmegeräts $G_2$ erfasst. Die jeweiligen Funktionsweisen einer Trägheitsmesseinheit 19, eines GNSS, einer Bildauswertung 21 und einer Auswertung 22 von 3D-Punktwolken bzw. anderer Möglichkeiten zum Erfassen von Lageänderungen $\delta_L$ und ihre jeweilige Anwendung in der Odometrie sind dem Fachmann bekannt.

Werden die Lageänderungen $\delta_L$ auf mehr als eine der vorgenannten Arten erfasst, d.h. ergänzen einander zumindest zwei der vorgenannten vier Varianten, um die Trajektorie T zu erzeugen, kann optional ein Minimum-Varianz-Schätzer 23, z.B. ein Kalman-Filter, angewandt werden, welcher aus (meist voneinander geringfügig abweichenden) Erfassungsergebnissen für jede Lageänderung $\delta_L$ eine einzige (im Allgemeinen genauere) Lageänderung $\delta_L$ zum Erzeugen der Trajektorie T schätzt.

Das erste 3D-Aufnahmegerät $G_1$ erzeugt seine erste 3D-Punktwolke $P_1$ z.B. nach einem Laserabtastverfahren, nach einem Laufzeitkameraverfahren oder nach einem Lichtschnittverfahren mit Lichtmusterprojektion. Auch das zweite 3D-Aufnahmegerät $G_2$ erzeugt seine zweite 3D-Punktwolke $P_2$ z.B. nach einem Laserabtastverfahren, nach einem Laufzeitkameraverfahren oder nach einem Lichtschnittverfahren mit Lichtmusterprojektion, u.zw. nach demselben Verfahren wie das erste 3D-Aufnahmegerät $G_1$ oder einem anderen Verfahren.

Wie dem Fachmann bekannt ist, wird beim Laserabtastverfahren mithilfe eines Laserscanners die Umgebung 1 mit aufeinanderfolgend ausgesandten Laserpulsen abgetastet und aus der Abtastrichtung jedes Laserpulses und der Laufzeit seiner Reflexion an der Umgebung die jeweilige 3D-Punktwolke $P_1$, $P_2$ erzeugt. Beim Laufzeitkameraverfahren wird die Umgebung 1 mit einem Lichtpuls beleuchtet, worauf eine Laufzeitkamera die Laufzeiten der Reflexionen an der Umgebung 1 zweidimensional auflöst und aus den Laufzeiten die jeweilige 3D-Punktwolke $P_1$, $P_2$ erzeugt. Beim Lichtschnittverfahren wird von einem Projektor ein Lichtmuster, z.B. ein Lichtgitter oder eine Vielzahl von Lichtpunkten, auf die Umgebung 1 projiziert und mit einer Kamera von einer vom Projektor verschiedenen Position aus das an der Umgebung 1 verzerrte Lichtmuster aufgenommen und aus den Verzerrungen die jeweilige 3D-Punktwolke $P_1$, $P_2$ erzeugt.

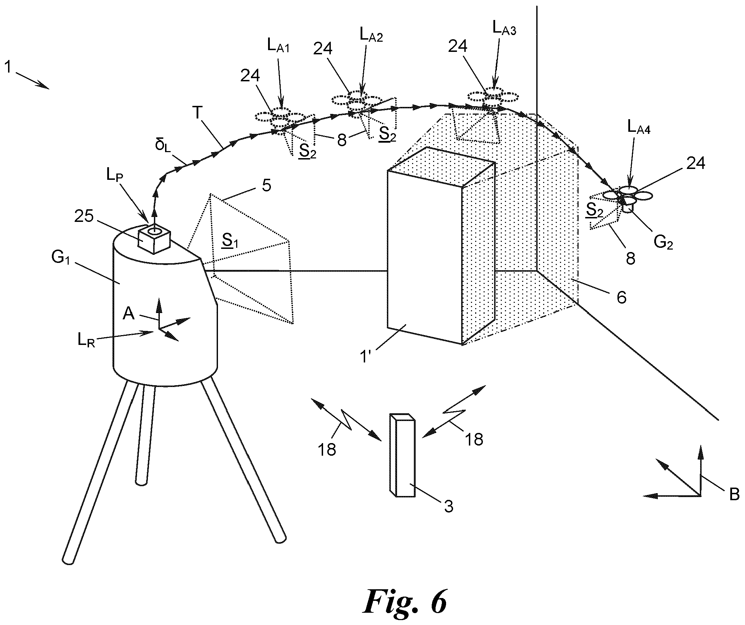

In der in Fig. 6 dargestellten Ausführungsform erfolgt Schritt 11 bzw. 14 des Verbringens mittels eines unbemannten Luftfahrzeugs 24, welches das zweite 3D-Aufnahmegerät $G_2$ trägt bzw. mit diesem ausgestattet ist. In diesem Beispiel erzeugt das mobile zweite 3D-Aufnahmegerät $G_2$ ferner mehrere (hier: vier) zweite 3D-Punktwolken $P_2$, indem das 3D-Aufnehmen (Schritt 7) mehrfach ausgeführt wird, d.h. es werden mehrere zweite Ausschnitte $S_2$ der Umgebung 1 (symbolisiert durch das jeweilige Sichtfeld 8) mit dem zweiten 3D-Aufnahmegerät $G_2$ von jeweils einer anderen im zweiten Koordinatensystem B ermittelten Aufnahmelage $L_{A1}$, $L_{A2}$, $L_{A3}$, $L_{A4}$ des zweiten 3D-Aufnahmegeräts $G_2$ aus erzeugt und daraus jeweils eine zweite 3D-Punktwolke $P_2$ erzeugt. Im Schritt 17 werden in weiterer Folge die erste und die mehreren zweiten 3D-Punktwolken $P_1$, $P_2$ im ersten Koordinatensystem A zu dem 3D-Modell M vereinigt.

Zum Einnehmen der Parklage $L_P$ dient in diesem Beispiel eine Landeplattform 25 für das unbemannte Luftfahrzeug 24, welche optional zur Energieversorgung und/oder zum Anschließen an die Auswerteeinheit 3 genutzt wird. Alle weiteren Schritte ergeben sich sinngemäß aus dem zuvor beschriebenen Verfahren 2.

Die Erfindung ist nicht auf die dargestellten Ausführungsformen beschränkt, sondern umfasst alle Varianten, Kombinationen und deren Modifikationen, die in den Rahmen der angeschlossenen Ansprüche fallen.

**Patentansprüche**

1. Verfahren zum Ermitteln eines 3D-Modells (M) einer Umgebung (1) mithilfe eines stationären ersten 3D-Aufnahmegeräts ($G_1$) zum Erzeugen einer ersten 3D-Punktwolke ($P_1$) in einem ersten Koordinatensystem (A), eines mobilen zweiten 3D-Aufnahmegeräts ($G_2$) zum Erzeugen zumindest einer zweiten 3D-Punktwolke ($P_2$) in einem zweiten Koordinatensystem (B) und einer an die beiden 3D-Aufnahmegeräte ($G_1$, $G_2$) anschließbaren oder angeschlossenen Auswerteeinheit (3), umfassend die Schritte:

   3D-Aufnehmen (4) eines ersten Ausschnitts ($S_1$) der Umgebung (1) mit dem ersten 3D-Aufnahmegerät ($G_1$) von einer im ersten Koordinatensystem (A) ermittelten Ruhelage ($L_R$) des ersten 3D-Aufnahmegeräts ($G_1$) aus, um die erste 3D-Punktwolke ($P_1$) zu erzeugen;
   vor oder nach dem 3D-Aufnehmen (4) des ersten Ausschnitts ($S_1$), 3D-Aufnehmen (7) eines zweiten Ausschnitts ($S_2$) der Umgebung (1) mit dem zweiten 3D-Aufnahmegerät ($G_2$) von einer im zweiten Koordinatensystem (B) ermittelten Aufnahmelage ($L_A$) des zweiten 3D-Aufnahmegeräts ($G_2$) aus, um die zweite 3D-Punktwolke ($P_2$) zu erzeugen;
   nach dem 3D-Aufnehmen (7) des zweiten Ausschnitts ($S_2$), Verbringen (11) des zweiten 3D-Aufnahmegeräts ($G_2$) von seiner Aufnahmelage ($L_A$) in eine im zweiten Koordinatensystem (B) ermittelte Parklage ($L_P$), oder vor dem 3D-Aufnehmen (7) des zweiten Ausschnitts ($S_2$), Verbringen (14) des zweiten 3D-Aufnahmegeräts ($G_2$) von einer im zweiten Koordinatensystem (B) ermittelten Parklage ($L_P$) in seine Aufnahmelage ($L_A$), wobei in der Parklage ($L_P$) das zweite 3D-Aufnahmegerät ($G_2$) eine im ersten oder zweiten Koordinatensystem (A, B) ermittelte Relativlage ($L_{rel}$) gegenüber der Ruhelage ($L_R$) einnimmt, welche das erste 3D-Aufnahmegerät ($G_1$) sowohl beim 3D-Aufnehmen (4) des ersten Ausschnitts ($S_1$) der Umgebung (1) als auch beim Einnehmen der Parklage ($L_P$) durch das zweite 3D-Aufnahmegerät ($G_2$) einnimmt;
   Abgleichen (12, 15) des zweiten Koordinatensystems (B) mit dem ersten Koordinatensystem (A) unter Berücksichtigung der Relativlage ($L_{rel}$) und einer im selben Koordinatensystem (A, B) wie die Relativlage ($L_{rel}$) ermittelten Abweichung ($\Delta L$) zwischen der im zweiten Koordinatensystem (B) ermittelten Parklage ($L_P$) und der im ersten Koordinatensystem (A) ermittelten Ruhelage ($L_R$) ;
   nach dem Abgleichen (12, 15), Aufstellen (16) der zweiten 3D-Punktwolke ($P_2$) im ersten Koordinatensystem (A); und
   Vereinigen (17) der ersten und zweiten 3D-Punktwolken ($P_1$, $P_2$) im ersten Koordinatensystem (A) zu dem 3D-Modell (M) in der Auswerteeinheit (3).

2. Verfahren nach Anspruch 1, wobei das zweite 3D-Aufnahmegerät ($G_2$) nach dem 3D-Aufnehmen (7) des zweiten Ausschnitts ($S_2$) von seiner Aufnahmelage ($L_A$) in seine Parklage ($L_P$) verbracht wird, **dadurch gekennzeichnet, dass** das zweite 3D-Aufnahmegerät ($G_2$) eine Trajektorie (T) von während des Verbringens (11) im zweiten Koordinatensystem (B) erfassten Lageänderungen ($\delta_L$) erzeugt, und dass die Parklage ($L_P$) im zweiten Koordinatensystem (B) aus der Aufnahmelage ($L_A$) und dieser Trajektorie (T) ermittelt wird.

3. Verfahren nach Anspruch 1, wobei das zweite 3D-Aufnahmegerät ($G_2$) vor dem 3D-Aufnehmen (7) des zweiten Ausschnitts ($S_2$) von seiner Parklage ($L_P$) in seine Aufnahmelage ($L_A$) verbracht wird, **dadurch gekennzeichnet, dass** das zweite 3D-Aufnahmegerät ($G_2$) eine Trajektorie (T) von während des Verbringens (14) im zweiten Koordinatensystem (B) erfassten Lageänderungen ($\delta_L$) erzeugt, und dass die Aufnahmelage ($L_A$) im zweiten Koordinatensystem (B) aus der Parklage ($L_P$) und dieser Trajektorie (T) ermittelt wird.

4. Verfahren nach Anspruch 2 oder 3, **dadurch gekennzeichnet, dass** die Lageänderungen ($\delta_L$) mithilfe einer Trägheitsmesseinheit (19) des zweiten 3D-Aufnahmegeräts ($G_2$) erfasst werden.

5. Verfahren nach Anspruch 2 oder 3, **dadurch gekennzeichnet, dass** die Lageänderungen ($\delta_L$) mithilfe eines globalen Navigationssatellitensystem-Empfängers (20) des zweiten 3D-Aufnahmegeräts ($G_2$) erfasst werden.

6. Verfahren nach Anspruch 2 oder 3, **dadurch gekennzeichnet, dass** die Lageänderungen ($\delta_L$) mithilfe einer Bildauswertung (21) von während des Verbringens (11, 14) aufeinanderfolgend aufgenommenen Bildern einer Fotokamera des zweiten 3D-Aufnahmegeräts ($G_2$) erfasst werden.

7. Verfahren nach Anspruch 2 oder 3, **dadurch gekennzeichnet, dass** die Lageänderungen ($\delta_L$) mithilfe einer Auswertung (22) von während des Verbringens (11, 14) aufeinanderfolgend aufgenommenen weiteren 3D-Punktwolken ($P_j$) des zweiten 3D-Aufnahmegeräts ($G_2$) erfasst werden.

8. Verfahren nach zumindest zwei der Ansprüche 4 bis 7, **dadurch gekennzeichnet, dass** zum Erzeugen der Trajektorie (T) auf die erfassten Lageänderungen ($\delta_L$) ein Minimum-Varianz-Schätzer (23), bevorzugt ein Kalman-Filter, angewandt wird.

9. Verfahren nach einem der Ansprüche 1 bis 8, **dadurch gekennzeichnet, dass** das erste und/oder das zweite 3D-Aufnahmegerät ($G_1$, $G_2$) die jeweilige 3D-Punktwolke ($P_1$, $P_2$) nach einem Laserabtastverfahren erzeugt.

10. Verfahren nach einem der Ansprüche 1 bis 8, **dadurch gekennzeichnet, dass** das erste und/oder das zweite 3D-Aufnahmegerät ($G_1$, $G_2$) die jeweilige 3D-Punktwolke ($P_1$, $P_2$) nach einem Laufzeitkameraverfahren erzeugt.

11. Verfahren nach einem der Ansprüche 1 bis 8, **dadurch gekennzeichnet, dass** das erste und/oder das zweite 3D-Aufnahmegerät ($G_1$, $G_2$) die jeweilige 3D-Punktwolke ($P_1$, $P_2$) nach einem Lichtschnittverfahren mit Lichtmusterprojektion erzeugt.

12. Verfahren nach einem der Ansprüche 1 bis 11, **dadurch gekennzeichnet, dass** das Verbringen (11, 14) mittels eines unbemannten Luftfahrzeugs (24) erfolgt.

**Claims**

1. A method for determining a 3D model (M) of an environment (1) using a stationary first 3D recording device ($G_1$) for generating a first 3D point cloud ($P_1$) in a first coordinate system (A), a mobile second 3D recording device ($G_2$) for generating at least one second 3D point cloud ($P_2$) in a second coordinate system (B), and an evaluation unit (3) connectable or connected to both 3D recording devices ($G_1$, $G_2$), comprising the steps of:

   3D recording (4) of a first section ($S_1$) of the environment (1) with the first 3D recording device ($G_1$) from a rest position ($L_R$) of the first 3D recording device ($G_1$) determined in the first coordinate system (A) to generate the first 3D point cloud ($P_1$);
   before or after the 3D recording (4) of the first section ($S_1$), 3D recording (7) of a second section ($S_2$) of the environment (1) with the second 3D recording device ($G_2$) from a recording position ($L_A$) of the second 3D recording device ($G_2$) determined in the second coordinate system (B) to generate the second 3D point cloud ($P_2$);
   after the 3D recording (7) of the second section ($S_2$), moving (11) the second 3D recording device ($G_2$) from its recording position ($L_A$) to a parking position ($L_P$) determined in the second coordinate system (B), or before the 3D recording (7) of the second section ($S_2$), moving (14) the second 3D recording device ($G_2$) from a parking position ($L_P$) determined in the second coordinate system (B) to its recording position ($L_A$), wherein in the parking position ($L_P$) the second 3D recording device ($G_2$) takes a relative position ($L_{rel}$) determined in the first or second coordinate system (A, B) with respect to the rest position ($L_R$) , which the first 3D recording device ($G_1$) takes both when 3D recording (4) the first section ($S_1$) of the environment (1) and when the second 3D recording device ($G_2$) takes the parking position ($L_P$);
   aligning (12, 15) the second coordinate system (B) with the first coordinate system (A) taking into account the relative position ($L_{rel}$) and a deviation ($\Delta L$), determined in the same coordinate system (A, B) as the relative position ($L_{rel}$), between the parking position ($L_P$) determined in the second coordinate system (B) and the rest position ($L_R$) determined in the first coordinate system (A);
   after the aligning (12, 15), arranging (16) the second 3D point cloud ($P_2$) in the first coordinate system (A); and
   combining (17) the first and second 3D point clouds ($P_1$, $P_2$) in the first coordinate system (A) to form the 3D model (M) in the evaluation unit (3).

2. The method according to claim 1, wherein the second 3D recording device ($G_2$) is moved from its recording position ($L_A$) to its parking position ($L_P$) after the 3D recording (7) of the second section ($S_2$), **characterized in that** the second 3D recording device ($G_2$) generates a trajectory (T) of position changes ($\delta_L$) detected during the movement (11) in the second coordinate system (B), and that the parking position ($L_P$) is determined in the second coordinate system (B) from the recording position ($L_A$) and this trajectory (T).

3. The method according to claim 1, wherein the second 3D recording device ($G_2$) is moved from its parking position ($L_P$) to its recording position ($L_A$) before the 3D recording (7) of the second section ($S_2$), **characterized in that** the second 3D recording device ($G_2$) generates a trajectory (T) of position changes ($\delta_L$) detected during the movement (14) in the second coordinate system (B), and that the recording position ($L_A$) is determined in the second coordinate system (B) from the parking position ($L_P$) and this trajectory (T).

4. The method according to claim 2 or 3, **characterized in that** the position changes ($\delta_L$) are detected by means of an inertial measurement unit (19) of the second 3D recording device ($G_2$).

5. The method according to claim 2 or 3, **characterized in that** the position changes ($\delta_L$) are detected by means of a global navigation satellite system receiver (20) of the second 3D recording device ($G_2$).

6. The method of claim 2 or 3, **characterized in that** the position changes ($\delta_L$) are detected by evaluating images (21) recorded consecutively during the movement (11, 14) by a camera of the second 3D recording device ($G_2$).

7. The method according to claim 2 or 3, **characterized in that** the position changes ($\delta_L$) are detected by evaluating (22) additional consecutive 3D point clouds ($P_j$) recorded during the movement (11, 14) by the second 3D recording device ($G_2$).

8. The method according to at least two of claims 4 to 7, **characterized in that** a minimum variance estimator (23), preferably a Kalman filter, is applied to the detected position changes ($\delta_L$) to generate the trajectory (T).

9. The method according to any one of claims 1 to 8, **characterized in that** the first and/or the second 3D recording device ($G_1$, $G_2$) generates the respective 3D point cloud ($P_1$, $P_2$) using a laser scanning method.

10. The method according to any one of claims 1 to 8, **characterized in that** the first and/or the second 3D recording device ($G_1$, $G_2$) generates the respective 3D point cloud ($P_1$, $P_2$) using a time-of-flight camera method.

11. The method according to any one of claims 1 to 8, **characterized in that** the first and/or the second 3D recording device ($G_1$, $G_2$) generates the respective 3D point cloud ($P_1$, $P_2$) using a light section method with light pattern projection.

12. The method according to any one of claims 1 to 11, **characterized in that** the movement (11, 14) is carried out using an unmanned aerial vehicle (24).

**Revendications**

1. Procédé de détermination d'un modèle 3D (M) d'un environnement (1) à l'aide d'un premier appareil d'enregistrement 3D ($G_1$) stationnaire permettant la création d'un premier nuage de points 3D ($P_1$) dans un premier système de coordonnées (A), d'un deuxième appareil d'enregistrement 3D ($G_2$) mobile permettant la création d'au moins un deuxième nuage de points 3D ($P_2$) dans un deuxième système de coordonnées (B) et d'une unité d'analyse (3) pouvant être raccordée ou étant raccordée aux deux appareils d'enregistrement 3D ($G_1$, $G_2$), comprenant les étapes :

d'enregistrement 3D (4) d'un premier secteur ($S_1$) de l'environnement (1) avec le premier appareil d'enregistrement 3D ($G_1$) à partir d'une position de repos ($L_R$) du premier appareil d'enregistrement 3D ($G_1$) déterminée dans le premier système de coordonnées (A) afin de créer le premier nuage de points 3D ($P_1$) ;
avant ou après l'enregistrement 3D (4) du premier secteur ($S_1$), d'enregistrement 3D (7) d'un deuxième secteur ($S_2$) de l'environnement (1) avec le deuxième appareil d'enregistrement 3D ($G_2$) à partir d'une position d'enregistrement ($L_A$) du deuxième appareil d'enregistrement 3D ($G_2$) déterminée dans le deuxième système de coordonnées (B) afin de créer le deuxième nuage de points 3D ($P_2$) ;
après l'enregistrement 3D (7) du deuxième secteur ($S_2$), de déplacement (11) du deuxième appareil d'enregistrement 3D ($G_2$) de sa position d'enregistrement ($L_A$) dans une position de stationnement ($L_P$) déterminée dans le deuxième système de coordonnées (B), ou avant l'enregistrement 3D (7) du deuxième secteur ($S_2$), de déplacement (14) du deuxième appareil d'enregistrement 3D ($G_2$) d'une position de stationnement ($L_P$) déterminée dans le deuxième système de coordonnées (B) dans sa position d'enregistrement ($L_A$), dans lequel, dans la position de stationnement ($L_P$), le deuxième appareil d'enregistrement 3D ($G_2$) adopte une position relative ($L_{rel}$) déterminée dans le premier ou le deuxième système de coordonnées (A, B) par rapport à la position de repos ($L_R$), laquelle est adoptée par le premier appareil d'enregistrement 3D ($G_1$) à la fois lors de l'enregistrement 3D (4) du premier secteur ($S_1$) de l'environnement (1) et lors de l'adoption de la position de stationnement ($L_P$) par le deuxième appareil d'enregistrement ($G_2$) ;

de comparaison (12, 15) du deuxième système de coordonnées (B) avec le premier système de coordonnées (A) en prenant en considération la position relative ($L_{rel}$) et un écart ($\Delta L$), déterminé dans le même système de coordonnées (A, B) que la position relative ($L_{rel}$), entre la position de stationnement ($L_P$), déterminée dans le deuxième système de coordonnées (B), et la position de repos ($L_R$), déterminée dans le premier système de coordonnées (A) ;

après la comparaison (12, 15), de composition (16) du deuxième nuage de points 3D ($P_2$) dans le premier système de coordonnées (A) ; et

de combinaison (17) des premier et deuxième nuages de points 3D ($P_1$, $P_2$) dans le premier système de coordonnées (A) pour former le modèle 3D (M) dans l'unité d'analyse (3).

2. Procédé selon la revendication 1, dans lequel le deuxième appareil d'enregistrement 3D ($G_2$) est déplacé de sa position d'enregistrement ($L_A$) dans sa position de stationnement ($L_P$) après l'enregistrement 3D (7) du deuxième secteur ($S_2$), **caractérisé en ce que** le deuxième appareil d'enregistrement 3D ($G_2$) crée une trajectoire (T) de modifications de position ($\delta_L$) détectées dans le deuxième système de coordonnées (B) pendant le déplacement (11), et que la position de stationnement ($L_P$) est déterminée dans le deuxième système de coordonnées (B) à partir de la position d'enregistrement ($L_A$) et de cette trajectoire (T).

3. Procédé selon la revendication 1, dans lequel le deuxième appareil d'enregistrement 3D ($G_2$) est déplacé de sa position de stationnement ($L_P$) dans sa position d'enregistrement ($L_A$) avant l'enregistrement 3D (7) du deuxième secteur ($S_2$), **caractérisé en ce que** le deuxième appareil d'enregistrement 3D ($G_2$) crée une trajectoire (T) de modifications de position ($\delta_L$) détectées dans le deuxième système de coordonnées (B) pendant le déplacement (14), et que la position d'enregistrement ($L_A$) est déterminée dans le deuxième système de coordonnées (B) à partir de la position de stationnement ($L_P$) et de cette trajectoire (T).

4. Procédé selon la revendication 2 ou 3, **caractérisé en ce que** les modifications de positions ($\delta_L$) sont détectées à l'aide d'une unité de mesure d'inertie (19) du deuxième appareil d'enregistrement 3D ($G_2$).

5. Procédé selon la revendication 2 ou 3, **caractérisé en ce que** les modifications de positions ($\delta_L$) sont détectées à l'aide d'un récepteur de système satellite de navigation global (20) du deuxième appareil d'enregistrement 3D ($G_2$).

6. Procédé selon la revendication 2 ou 3, **caractérisé en ce que** les modifications de positions ($\delta_L$) sont détectées à l'aide d'une analyse d'images (21) d'images successives enregistrées d'un appareil photographique du deuxième appareil d'enregistrement 3D ($G_2$) pendant le déplacement (11, 14).

7. Procédé selon la revendication 2 ou 3, **caractérisé en ce que** les modifications de positions ($\delta_L$) sont détectées à l'aide d'une analyse (22) d'autres nuages de points 3D ($P_j$) successivement enregistrés pendant le déplacement (11, 14) du deuxième appareil d'enregistrement 3D ($G_2$).

8. Procédé selon au moins deux des revendications 4 à 7, **caractérisé en ce qu'**on applique un estimateur de variance minimale (23), de préférence, un filtre de Kalman, aux modifications de positions ($\delta_L$) détectées pour la création de la trajectoire (T).

9. Procédé selon l'une des revendications 1 à 8, **caractérisé en ce que** le premier et/ou le deuxième appareil d'enregistrement 3D ($G_1$, $G_2$) crée le nuage de points 3D ($P_1$, $P_2$) respectif d'après un procédé de balayage laser.

10. Procédé selon l'une des revendications 1 à 8, **caractérisé en ce que** le premier et/ou le deuxième appareil d'enregistrement 3D ($G_1$, $G_2$) crée le nuage de points 3D ($P_1$, $P_2$) respectif d'après un procédé de caméra temps de vol.

11. Procédé selon l'une des revendications 1 à 8, **caractérisé en ce que** le premier et/ou le deuxième appareil d'enregistrement 3D ($G_1$, $G_2$) crée le nuage de points 3D ($P_1$, $P_2$) respectif d'après un procédé de coupe optique avec projection de motifs lumineux.

12. Procédé selon l'une des revendications 1 à 11, **caractérisé en ce que** le déplacement (11, 14) a lieu au moyen d'un aéronef (24) sans équipage.

*Fig. 1*

*Fig. 2*

EP 4 020 373 B1

*Fig. 3a*

*Fig. 3b*

*Fig. 4a*

*Fig. 4b*

*Fig. 4c*

**Fig. 5a**

**Fig. 5b**

**Fig. 5c**

*Fig. 6*

EP 4 020 373 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SCHRIFT GRUEN et al.** Joint Processing of UAV Imagery and Terrestrial Mobile Mapping System Data for Very High Resolution City Modeling. *International Archives of the Photogrammetry, Remote Sensing and Spatial Information Sciences,* 04. September 2013, vol. XL-1/W2, 175-182, https://core.ac.uk/download/ pdf/193636235.pdf